# FASCICULE DE BREVET EUROPEEN

(11) **EP 2 495 157 B1**
(45) Date de publication et mention de la délivrance du brevet: **13.11.2013**
(21) Numéro de dépôt: 12155475.2
(22) Date de dépôt: 14.02.2012
(51) Int. Cl.: B62D 25/06

(54) **Ensemble de structure pour former un pavillon de véhicule à toit ouvrant et véhicule comprenant un tel ensemble de structure**
Strukturanordnung zur Herstellung eines Daches eines ein Schiebedach aufweisenden Fahrzeugs und Fahrzeug mit einer solchen Anordnung
Structural assembly for forming a roof of a vehicle having an opening roof and vehicle having such an assembly

(30) Priorité: 01.03.2011 FR 1151667
(43) Date de publication de la demande: 05.09.2012
(73) Titulaire: Peugeot Citroën Automobiles SA, 78140 Vélizy Villacoublay (FR)
(72) Inventeur: Mauduit, Franck, 91490 Milly La Foret (FR); Grosset, Romain, 94230 Cachan (FR); Opper, Fabien, 92160 Antony (FR)

(56) Documents cités:
- DE-A1-102009 009 972
- DE-A1-102009 016 682

## Description

La présente invention concerne un ensemble de structure, pour former un pavillon de véhicule à toit ouvrant. De plus, la présente invention concerne un véhicule comprenant un tel ensemble de structure.

La présente invention trouve notamment application dans le domaine des véhicules équipés de toits ouvrants du type coulissant.

Dans un véhicule de l'art antérieur, voir par exemple le document DE 10 2009 009 972 A1, l'ensemble de structure qui forme le pavillon à toit ouvrant comporte deux arcs de pavillon adaptés pour coopérer avec le panneau mobile du toit ouvrant en position fermée. Une traverse avant est solidarisée, suivant une direction transversale du véhicule, à chaque arc de pavillon de façon à être disposée près de la partie supérieure de la baie de pare-brise avant.

Cependant, un ensemble de structure de l'art antérieur nécessite des éléments structurels supplémentaires pour présenter une résistance mécanique acceptable, notamment face aux efforts de torsion et lors d'un choc frontal et/ou latéral sur le véhicule.

La présente invention vise notamment à résoudre, en tout ou partie, les problèmes mentionnés ci-avant.

A cet effet, l'invention a pour objet un ensemble de structure, pour former un pavillon de véhicule à toit ouvrant, l'ensemble de structure comportant :
- au moins un arc de pavillon adapté pour coopérer avec un panneau mobile du toit ouvrant en position fermée ; et
- une traverse avant solidarisée au ou à chaque arc de pavillon de façon à être disposée près de la partie supérieure d'une baie de pare-brise avant.

L'ensemble de structure se **caractérise en ce qu'**il comporte en outre un organe de renfort comprenant une première partie solidaire de l'arc de pavillon et une deuxième partie solidaire de la traverse avant, l'intersection entre la première partie et la deuxième partie définissant une portion coudée.

Ainsi, un tel organe de renfort peut absorber une partie des efforts de torsion, notamment de torsion statique, et/ou de choc, notamment frontal et/ou latéral. Un tel organe de renfort permet d'augmenter la résistance mécanique du pavillon du véhicule et d'en maîtriser la déformation sous les contraintes précitées. Un tel organe de renfort simplifie le ferrage et l'emboutissage par rapport à un ensemble de structure de l'art antérieur, lequel nécessite généralement d'ajouter un raidisseur sous la caisse. Ainsi, la conception peut conserver les éléments mécaniques sous caisse et les trains roulants standards.

Selon un mode de réalisation, la portion coudée est située près de l'intersection entre l'arc de pavillon et la traverse avant.

Ainsi, un tel organe de renfort forme une structure compacte et bien intégrée à l'ensemble de structure.

Selon un mode de réalisation, l'organe de renfort est formé par une tôle emboutie, l'ensemble de structure formant une région creuse près de l'intersection entre l'arc de pavillon et la traverse avant.

Ainsi, une telle région creuse augmente les moments d'inertie de la portion coudée, donc la résistance mécanique de l'ensemble de structure aux contraintes résultant de choc frontal et/ou latéral et en torsion de la caisse, ce qui contribue à limiter l'enfoncement de l'arc de pavillon lors d'un choc ou d'une torsion.

Selon un mode de réalisation, l'ensemble de structure définit une ouverture de toit ouvrant qui s'étend sensiblement de la traverse avant au bas de la baie de pare-brise arrière.

En d'autres termes, l'ensemble de structure est dépourvu d'arceau central et de traverse arrière. Ainsi, un tel ensemble de structure est relativement léger et simple à assembler. De plus, un tel ensemble de structure permet d'améliorer l'esthétique en proposant une plus grande surface dégagée pour le toit ouvrant, tout en conservant une importante résistance mécanique de la structure du véhicule.

Selon un mode de réalisation, la première partie s'étend le long d'une partie substantielle de l'arc de pavillon.

Ainsi, une telle première partie est intégrée de manière compacte à la traverse avant.

Selon un mode de réalisation, la deuxième partie s'étend le long de la traverse avant.

Ainsi, une telle deuxième partie est intégrée de manière compacte à l'arc de pavillon.

Selon un mode de réalisation, l'organe de renfort est solidarisé par soudure à l'arc de pavillon.

Ainsi, une telle liaison soudée contribue à la résistance mécanique de l'ensemble de structure.

Selon un mode de réalisation, l'organe de renfort est solidarisé par soudure à la traverse avant.

Ainsi, une telle liaison soudée contribue à la résistance mécanique de l'ensemble de structure.

Selon un mode de réalisation, la portion coudée forme un angle compris entre 60° et 120°, de préférence entre 70 ° et 110°.

Ainsi, un tel angle confère à l'ensemble de structure un moment d'inertie élevé suivant une direction transversale du véhicule.

Par ailleurs, la présente invention a pour objet un véhicule comprenant un pavillon à toit ouvrant, le véhicule étant **caractérisé en ce que** le pavillon à toit ouvrant est formé d'un ensemble de structure tel que précédemment exposé.

La présente invention sera bien comprise et ses avantages ressortiront aussi à la lumière de la description qui va suivre, donnée uniquement à titre d'exemple non limitatif et faite en référence aux dessins annexés, dans lesquels :
- la figure 1 est une vue de dessus d'un ensemble de structure conforme à l'invention ;
- la figure 2 est une vue de dessous du détail II à la figure 1 ; et
- la figure 3 est une section suivant la ligne III à la figure 2.

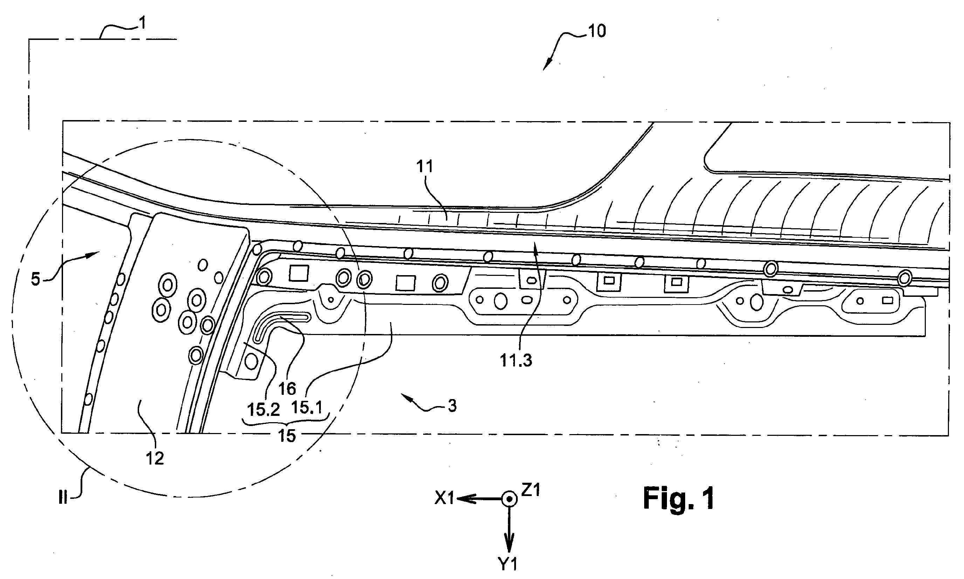

La figure 1 illustre un véhicule 1, symbolisé en trait mixte à la figure 1, qui comprend un toit ouvrant non représenté et un ensemble de structure 10 pour former un pavillon du véhicule 1. Le toit ouvrant du véhicule 1 est formé d'un panneau mobile non représenté qui est mobile entre une position ouverte, dans laquelle il dégage une ouverture 3 et une position fermée, dans laquelle il obture l'ouverture 3.

Dans la présente demande, un élément est dit « de structure » ou « structurel » s'il appartient à la structure de caisse du véhicule 1, comme la carrosserie. Un élément structurel est généralement réalisé en métal pour présenter une résistance mécanique élevée.

L'ensemble de structure 10 comporte deux arcs de pavillon dont l'un porte la référence 11 à la figure 1. L'arc de pavillon 11 est adapté pour coopérer avec le panneau mobile en position fermée, car il a un bord latéral 11.3 adapté pour recevoir, de façon étanche, un bord complémentaire du panneau mobile. L'ensemble de structure 10 forme le pavillon du véhicule 1.

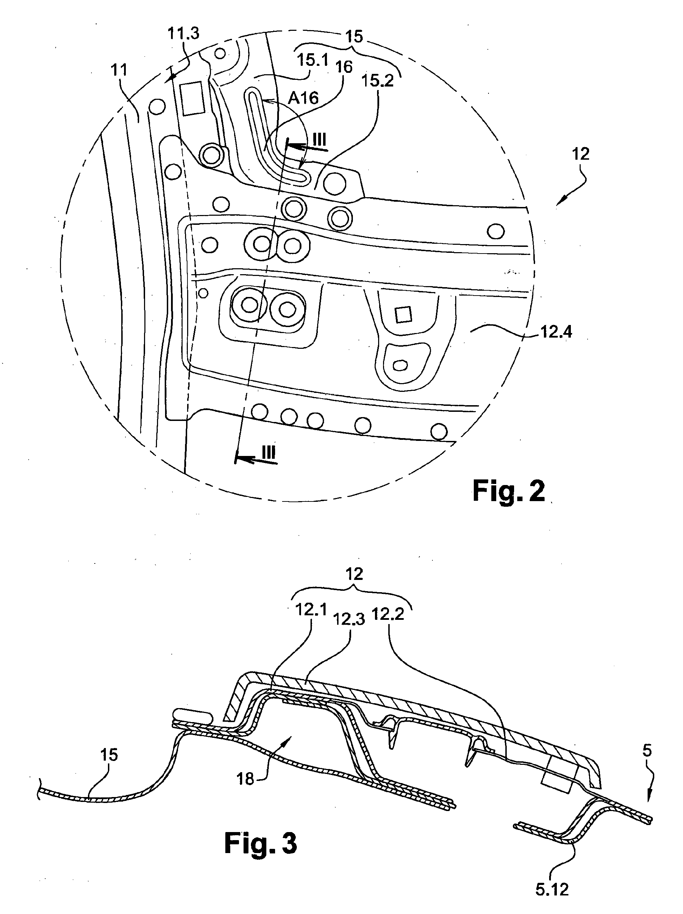

L'ensemble de structure 1 comporte en outre une traverse avant 12 qui est solidarisée à chaque arc de pavillon 11 et équivalent, de façon à être disposée près de la partie supérieure 5 d'une baie de pare-brise avant, en particulier près d'une doublure 5.12 du montant de la baie de pare-brise avant, visible à la figure 3. La traverse avant 12 peut être solidarisée à l'arc de pavillon 11 par soudage, rivetage, vissage, encliquetage ou tout moyen équivalent. Plusieurs points de soudure sont représentés par des cercles simples ou doubles sur les figures 1 et 2. La traverse avant 12 est aussi dénommée traverse de baie de pare-brise avant.

Dans la présente demande, un élément qualifié de longitudinal s'étend parallèlement à une direction longitudinale X1 qui est orientée suivant le sens de marche normale ou marche avant du véhicule 1. Les termes « avant » et « arrière » se rapportent à la direction longitudinale X1 ainsi orientée.

Dans la présente demande, le terme « latéral » et ses dérivés désignent un élément disposé près de l'un des côtés, droit ou gauche, du véhicule 1. Le terme « latéral » et ses dérivés distingue des éléments suivant une direction transversale Y1 qui est perpendiculaire à la direction longitudinale X1. Ainsi, l'arc de pavillon 11 est situé du côté droit du véhicule 1.

Dans la présente demande, un élément qualifié par le terme « inférieur » ou « bas » ou un dérivé est situé plus près du sol ou du bas de caisse, lorsque le véhicule 1 est en service, qu'un élément qualifié par les termes « supérieur » ou « haut » ou un dérivé. Sur la figure 1, l'axe Z1 est vertical et ascendant lorsque le véhicule 1 avance en marche normale ou marche avant sur un support horizontal.

L'ensemble de structure 1 comporte en outre un organe de renfort 15 qui comprend une première partie 15.1 solidaire de l'arc de pavillon 11 et une deuxième partie 15.2 solidaire de la traverse avant 12. L'intersection entre la première partie 15.1 et la deuxième partie 15.2 définit une portion coudée 16.

Comme le montre la figure 1, la première partie 15.1 s'étend le long d'une partie substantielle de l'arc de pavillon 11. La deuxième partie 15.2 s'étend le long de la traverse avant 12. Dans l'exemple des figures, la première partie 15.1 et sensiblement plus longue que la deuxième partie 15.2.

L'organe de renfort 15 est formé par une tôle emboutie. L'organe de renfort 15 est solidarisé par soudure à l'arc de pavillon 11. De même, l'organe de renfort 15 est solidarisé par soudure à la traverse avant 12. Plusieurs points de soudure sont représentés par des cercles simples ou doubles sur les figures 1 et 2.

Comme le montre la figure 2, la portion coudée 16 est située près de l'intersection entre l'arc de pavillon 11 et la traverse avant 12. La portion coudée forme un angle A16 qui est d'environ 100°. En pratique, cet angle peut être compris entre 60 ° et 120°, de préférence entre 70° et 110°.

Comme le montre la figure 3, l'ensemble de structure 10 forme une région creuse 18 près de l'intersection entre l'arc de pavillon 11 et la traverse avant 12. À cet effet, les composants de l'ensemble de structure 10 sont en tôle emboutie. La région creuse 18 permet à l'ensemble de structure 10 de présenter des moments d'inertie élevés suivant la direction longitudinale X1, la direction transversale Y1 et/ou la direction verticale Z1.

La traverse avant 12 est composée d'un élément structurel 12.1, d'une doublure de traverse avant 12.2 et d'un cache 12.3. L'élément structurel 12.1 et la doublure de traverse avant 12.2 ont notamment pour fonction de supporter les contraintes s'exerçant sur la traverse avant 12. Le cache 12.3 a notamment une fonction esthétique pour masquer les composants de la traverse avant 12. À l'intérieur de l'habitacle, la traverse avant 12 comprend un élément d'habillage 12.4 pour masquer aux passagers les composants de la traverse avant 12.

L'ouverture 3 de toit ouvrant, que définit l'ensemble de structure 10, s'étend sensiblement de la traverse avant 12 à la baie de pare-brise arrière non représentée. En d'autres termes, l'ensemble de structure 10 est dépourvu d'arceau central et de traverse arrière.

Selon d'autres caractéristiques avantageuses mais facultatives, prises isolément ou selon toute combinaison techniquement possible :
- L'organe de renfort forme une interface pour la fixation d'un cadre de toit et/ou d'un garnissage latéral du pavillon, ce qui évite de fabriquer et d'assembler des supports spécifiques à cet effet.

## Revendications

1. Ensemble de structure (10), pour former un pavillon de véhicule à toit ouvrant, l'ensemble de structure (10) comportant :
- au moins un arc de pavillon (11) adapté pour coopérer avec un panneau mobile du toit ouvrant en position fermée ; et
- une traverse avant (12) solidarisée au ou à chaque arc de pavillon (11) de façon à être disposée près de la partie supérieure (5) d'une baie de pare-brise avant ;
l'ensemble de structure (10) étant **caractérisé en ce qu'**il comporte en outre un organe de renfort (15) comprenant une première partie (15.1) solidaire de l'arc de pavillon (11) et une deuxième partie (15.2) solidaire de la traverse avant (12), l'intersection entre la première partie (15.1) et la deuxième partie (15.2) définissant une portion coudée (16).

2. Ensemble de structure (10) selon la revendication 1, dans lequel la portion coudée (16) est située près de l'intersection entre l'arc de pavillon (11) et la traverse avant (12).

3. Ensemble de structure (10) selon la revendication 2, dans lequel l'organe de renfort (15) est formé par une tôle emboutie, l'ensemble de structure (10) formant une région creuse (18) près de l'intersection entre l'arc de pavillon (11) et la traverse avant (12).

4. Ensemble de structure (10) selon l'une des revendications précédentes, dans lequel l'ensemble de structure (10) définit une ouverture de toit ouvrant (3) qui s'étend sensiblement de la traverse avant (12) au bas de la baie de pare-brise arrière.

5. Ensemble de structure (10) selon l'une des revendications précédentes, dans lequel la première partie (15.1) s'étend le long d'une partie substantielle de l'arc de pavillon (11).

6. Ensemble de structure (10) selon l'une des revendications précédentes, dans lequel la deuxième partie (15.2) s'étend le long de la traverse avant (12).

7. Ensemble de structure (10) selon l'une des revendications précédentes, dans lequel l'organe de renfort (15) est solidarisé par soudure à l'arc de pavillon (11).

8. Ensemble de structure (10) selon l'une des revendications précédentes, dans lequel l'organe de renfort (15) est solidarisé par soudure à la traverse avant (12).

9. Ensemble de structure (10) selon l'une des revendications précédentes, dans lequel la portion coudée (16) forme un angle (A16) compris entre 60° et 120°, de préférence entre 70° et 110°.

10. Véhicule (1) comprenant un pavillon à toit ouvrant, le véhicule (1) étant **caractérisé en ce que** le pavillon à toit ouvrant est formé d'un ensemble de structure (10) selon l'une des revendications précédentes.

## Patentansprüche

1. Strukturanordnung (10) zum Herstellen eines Dachs eines Fahrzeugs mit Schiebedach, wobei die Struktureinheit (10) Folgendes aufweist:
- mindestens einen Dachbogen (11), der angepasst ist, um mit einer beweglichen Platte des Schiebedachs in geschlossener Position zusammenzuwirken, und
- einen vorderen Querträger (12), der mit dem oder jedem Dachbogen (11) derart fest verbunden ist, dass er nahe dem oberen Teil (5) einer vorderen Windschutzscheibenöffnung angeordnet ist,
wobei die Strukturanordnung (10) **dadurch gekennzeichnet ist, dass** sie ferner ein Verstärkungsorgan (15) aufweist, das einen ersten Teil (15.1) aufweist, der fest mit dem Dachbogen (11) verbunden ist, und einen zweiten Teil (15.2), der fest mit dem vorderen Querträger (12) verbunden ist, wobei die Schnittstelle zwischen dem ersten Teil (15.1) und dem zweiten Teil (15.2) einen gekrümmten Abschnitt (16) bildet.

2. Strukturanordnung (10) nach Anspruch 1, bei der der gekrümmte Abschnitt (16) nahe der Schnittstelle zwischen dem Dachbogen (11) und dem vorderen Querträger (12) liegt.

3. Strukturanordnung (10) nach Anspruch 2, bei der das Verstärkungsorgan (15) aus einem Stanzblech gebildet ist, wobei die Strukturanordnung (10) einen hohlen Bereich (18) nahe der Schnittstelle zwischen dem Dachbogen (11) und dem vorderen Querträger (12) bildet.

4. Strukturanordnung (10) nach einem der vorhergehenden Ansprüche, bei der die Strukturanordnung (10) eine Schiebedachöffnung (3) definiert, die sich im Wesentlichen von dem vorderen Querträger (12) zur Unterseite der Heckfensteröffnung erstreckt.

5. Strukturanordnung (10) nach einem der vorhergehenden Ansprüche, bei der sich der erste Teil (15.1) entlang eines wesentlichen Teils des Dachbogens (11) erstreckt.

6. Strukturanordnung (10) nach einem der vorhergehenden Ansprüche, bei der sich der zweite Teil (15.2) entlang des vorderen Querträgers (12) erstreckt.

7. Strukturanordnung (10) nach einem der vorhergehenden Ansprüche, bei der das Verstärkungsorgan (15) durch Schweißen mit dem Dachbogen (11) verbunden ist.

8. Strukturanordnung (10) nach einem der vorhergehenden Ansprüche, bei dem das Verstärkungsorgan (15) durch Schweißen mit dem vorderen Querträger (12) verbunden ist.

9. Strukturanordnung (10) nach einem der vorhergehenden Ansprüche, bei der der gekrümmte Abschnitt (16) einen Winkel (A16) bildet, der zwischen 60° und 120°, vorzugsweise zwischen 70° und 110° liegt.

10. Fahrzeug (1), das ein Schiebedach aufweist, wobei das Fahrzeug (1) **dadurch gekennzeichnet ist, dass** das Schiebedach aus einer Strukturanordnung (10) nach einem der vorhergehenden Ansprüche gebildet ist.

## Claims

1. A structural assembly (10) for forming a roof of a vehicle having an opening roof, the structural assembly (10) comprising:
- at least one roof arch (11) adapted to cooperate with a movable panel of the opening roof in closed position; and
- a front crosspiece (12) secured to the or each roof arch (11) so as to be disposed close to the upper part (5) of a front windscreen aperture;
the structural assembly (10) being **characterized in that** it further comprises a reinforcement member (15) including a first part (15.1) integral with the roof arch (11) and a second part (15.2) integral with the front crosspiece (12), the intersection between the first part (15.1) and the second part (15.2) defining a bent portion (16).

2. The structural assembly (10) according to Claim 1, in which the bent portion (16) is situated close to the intersection between the roof arch (11) and the front crosspiece (12).

3. The structural assembly (10) according to Claim 2, in which the reinforcement member (15) is formed by a stamped plate, the structural assembly (10) forming a hollow region (18) close to the intersection between the roof arch (11) and the front crosspiece (12).

4. The structural assembly (10) according to one of the preceding claims, in which the structural assembly (10) defines an opening of an opening roof (3) which extends substantially from the front crosspiece (12) to the bottom of the rear windscreen aperture.

5. The structural assembly (10) according to one of the preceding claims, in which the first part (15.1) extends along a substantial part of the roof arch (11).

6. The structural assembly (10) according to one of the preceding claims, in which the second part (15.2) extends along the front crosspiece (12).

7. The structural assembly (10) according to one of the preceding claims, in which the reinforcement member (15) is secured by welding to the roof arch (11).

8. The structural assembly (10) according to one of the preceding claims, in which the reinforcement member (15) is secured by welding to the front crosspiece (12).

9. The structural assembly (10) according to one of the preceding claims, in which the bent portion (16) forms an angle (A16) comprised between 60° and 120°, preferably between 70° and 110°.

10. A vehicle (1) including a roof having an opening roof, the vehicle (1) being **characterized in that** the roof having an opening roof is formed by a structural assembly (10) according to one of the preceding claims.
